# EUROPEAN PATENT APPLICATION

(11) **EP 4 734 339 A1**
(43) Date of publication of application: **29.04.2026**
(21) Application number: 23942487.2
(22) Date of filing: 13.12.2023
(51) Int. Cl.: H02K 9/19, H02K 5/173, H02K 5/20

(54) **ROTARY ELECTRICAL MACHINE AND AIR COMPRESSOR USING ROTARY ELECTRICAL MACHINE**

(30) Priority: 20.06.2023 JP 2023100841
(71) Applicant: Hitachi, Ltd., Tokyo 100-8280 (JP); Hitachi Industrial Equipment Systems Co., Ltd., Tokyo 101-0021 (JP)
(72) Inventor: TAKEUCHI, Keisuke, Tokyo 100-8280 (JP); KIMURA, Mamoru, Tokyo 101-0021 (JP); ASAUMI, Yusuke, Tokyo 100-8280 (JP)
(74) Representative: MERH-IP Matias Erny Reichl Hoffmann Patentanwälte PartG mbB
(86) International application number: PCT/JP2023/044556
(87) International publication number: WO 2024/262059

(57) **Abstract**

A cooling medium supplied from an outside is used to efficiently cool heat-generation portions of a rotary electrical machine. In a rotary electrical machine 1 including a rotating shaft 8; bearings 16 and 21 that support the rotating shaft 8; a stator 26; and a housing 2 that accommodates the rotor 10, the bearings 16 and 21, and the stator 26, a bearing accommodating portion 31 having a cylindrical shape that accommodates the bearings 16 and 21 is formed integrally with an end bracket 30 that holds one end side of a cylindrical portion 3 of the housing 2. In the end bracket 30, flow passages (42 and 43) for a cooling medium supplied from an outside are formed, and the axial flow passage 43 extending in an axial direction is branched to form a first flow passage 44 connected to a nozzle 50 that sprays the cooling medium onto an end face of the rotor 10, and a second flow passage 45 connected to a nozzle 55 that sprays the cooling medium onto the bearings 16 and 21.

## Description

### TECHNICAL FIELD

The present invention relates to a rotary electrical machine and an air compressor using the same.

### BACKGROUND ART

High-speed rotation that is means for realizing an improvement in output density and a reduction in cost resulting therefrom is required for a rotary electrical machine. In the rotary electrical machine, an increase in rotation speed leads to increased frictional loss in bearings that rotatably support a rotating shaft, which is a concern, and an increase in frequency leads to increased eddy current loss, hysteresis loss, or the like in a rotor, which is a concern. These losses cause localized heat generation, and it is important to cool these heat-generation locations. As a countermeasure, a cooling medium is supplied from the outside, and is sprayed onto a cooling target at high speed without spreading. Specifically, a spray unit for the cooling medium is disposed in the vicinity of the cooling target, and a cooling medium flow passage to the spray unit is formed.

Since both the bearings that support the rotating shaft of the rotary electrical machine and the rotor are rotating portions, in order to efficiently cool the bearings and the rotor, design considerations for reliably applying the cooling medium to the cooling target without being obstructed by a surrounding fluid layer that co-rotates along therewith are required. For example, a rotary electrical machine described in Patent Document 1 has been known. The rotary electrical machine disclosed in Patent Document 1 supplies lubricating oil from a cooling medium flow passage machined into an end bracket toward a rotating shaft and bearings. Accordingly, since the cooling medium flow passage for the rotating shaft and the bearings can be configured using a single cooling medium circuit, the lubrication of the bearings and the cooling of the bearings and the rotor can be inexpensively and simply realized. However, since two bearings are fixed to fit within the thickness of the end bracket when viewed in a rotation axis direction, the thickness of the end bracket is increased. In addition, since the cooling medium flow passage extending in a radial direction are provided inside the end bracket with an increased thickness, the routing of pipes and a spray unit so as to prevent interference between components may cause the device to become complicated.

Patent Document 2 is known as another background art document. In Patent Document 2, a flow passage for supplying a cooling medium (oil) is provided in an outer peripheral portion of a housing, and the cooling medium is supplied in a radial direction from an outer peripheral side of a rotating body of a rotary electrical machine toward a rotor. In addition, the flow passage branches off from the outer peripheral portion of the housing, and supplies the cooling medium to bearings through an end bracket.

### CITATION LIST

### PATENT DOCUMENTS

Patent Document 1: JP 2007-523308 A
Patent Document 2: JP 2018-91301 A

### SUMMARY OF THE INVENTION

### PROBLEMS TO BE SOLVED BY THE INVENTION

In the rotary electrical machine disclosed in Patent Document 1, since the cooling medium is supplied only to the bearings and the rotating shaft, and the cooling medium supplied to the rotating shaft is sealed by a seal lip, no cooling effect can be expected for the rotor core which is a main heat-generation location of the rotor, or for a field source of the rotor. The field source refers to a permanent magnet in the case of a permanent magnet motor, or a rotor conductor in the case of an induction motor or a wound-field motor. Accordingly, the performance deterioration of the rotary electrical machine occurs due to thermal expansion of the rotor, thermal demagnetization of the magnet, an increase in the resistivity of the rotor conductor, or the like. In the rotary electrical machine disclosed in Patent Document 2, flow passages for spraying the cooling medium onto an outer peripheral surface of the rotor are machined, and both the flow passages are provided to branch off from one oil supply port. However, in the method for applying the cooling medium to the outer peripheral side of the rotor, the cooling medium is repelled by the fluid layer that co-rotates along with the rotation of the rotor, and efficient cooling is hindered, which is a risk. In addition, in order to reliably supply the cooling medium to the bearings and the rotor, it is necessary to dispose a branch portion in a space of a cylindrical portion of the housing, and therefore, the structure becomes complicated.

The present invention has been made in view of the above-mentioned background, and an object of the present invention is to improve the cooling performance of a rotary electrical machine by supplying a cooling medium from outside the rotary electrical machine.

Another object of the present invention is to realize a rotary electrical machine in which a cooling structure is improved and the number of components is reduced by forming a cooling medium flow passage using a through-hole penetrating through the inside of an end bracket forming a housing of the rotary electrical machine, and an air compressor using the rotary electrical machine.

### SOLUTIONS TO PROBLEMS

In order to achieve the above-mentioned objects, there is provided a rotary electrical machine including: a rotating shaft; a rotor including a rotor core fixed to the rotating shaft; bearings that rotatably support the rotating shaft on one side (front side) and the other side (rear side) of the rotor core; and a stator including a stator core and an armature winding, the rotating shaft, the rotor, the bearings, and the stator being housed in a housing. The bearings are held by the housing, the housing is formed by a cylindrical portion and bracket portions provided on both sides of the cylindrical portion, and bearing holders for holding outer rings of the bearings are formed in the bracket portions. In each of the bracket portions, an introduction flow passage for a cooling medium supplied from outside the housing, and an axial flow passage formed inside the bearing holder so as to be connected to the introduction flow passage and extend in an axis direction of the rotating shaft are formed. In the axial flow passage, a first flow passage that sprays the cooling medium in an axial direction onto an end face of the rotor, which is orthogonal to the rotating shaft, from an end face of the bearing holder close to the rotor, and a second flow passage that branches off midway along the axial flow passage_and that sprays the cooling medium onto the bearing. A downstream end portion of the first flow passage is connected to a first nozzle, and a cross-sectional area of a spray opening of the first nozzle is formed to be smaller than a cross-sectional area of the first flow passage. A downstream end portion of the second flow passage is connected to a second nozzle, and a cross-sectional area of a spray opening of the second nozzle is formed to be smaller than a cross-sectional area of the second flow passage.

According to another feature of the present invention, one or a plurality of the spray openings of the second nozzle are provided, and the cross-sectional area of the second flow passage is formed to be larger than a sum of the cross-sectional areas of the plurality of spray openings of the second nozzle. In addition, when viewed in a radial direction from the rotating shaft, the spray opening of the first nozzle is provided on an inner side closer to the rotating shaft than a center of a radial range occupied by an end face of the rotor core. The first nozzle is provided on an end face of the bearing holder in a longitudinal direction, namely, an end face close to the rotor, and the second nozzle is provided on an inner peripheral surface of the bearing holder.

According to still another feature of the present invention, the spray opening of the first nozzle may be formed in any one of a circular shape, an elliptical shape, and a rectangular shape. In addition, a spray direction of the cooling medium from the spray opening of the first nozzle may be provided to be inclined at a predetermined angle in a rotation direction (circumferential direction) of the rotor. An air compressor with high efficiency can be realized by driving an air end using the above-described rotary electrical machine.

### EFFECTS OF THE INVENTION

According to the present invention, the cooling structure for improving the cooling performance of the rotary electrical machine can be realized with a simple flow passage configuration, and the manufacturing costs and maintainability of the rotary electrical machine are improved. In addition, since the cooling medium is sprayed at high speed onto the end face of the rotor, the cooling medium can be reliably applied and cool the end face without being repelled by a fluid layer that co-rotates along with the rotation of the rotor. Furthermore, since the cooling medium can be supplied not only to the end face of the rotor but also to the bearing portions at the same time, the effective cooling of the bearings and the periphery thereof can be achieved.

Problems, configurations, and effects other than those described above will become apparent from the following description of embodiments.

### BRIEF DESCRIPTION OF THE DRAWINGS

Fig. 1 is a perspective view showing the appearance of a rotary electrical machine.1 according to an embodiment of the present invention.
Fig. 2 is a front view of the rotary electrical machine 1 according to the embodiment of the present invention.
Fig. 3 is a longitudinal cross-sectional view of an axial front half portion of the rotary electrical machine 1.
Fig. 4 is a longitudinal cross-sectional view of an axial rear half portion of the rotary electrical machine 1.
Fig. 5 is a partial enlarged view of a cooling medium flow passage 40 of the rotary electrical machine 1 shown in Fig. 3.
Fig. 6 is a partial enlarged view of the vicinity of a bearing accommodating portion 31 shown in Fig. 5.
Fig. 7 is a partial enlarged view of a cooling medium flow passage 70 of the rotary electrical machine 1 shown in Fig. 4.
Fig. 8 is a comparison view of the flow passage cross-sections of a first flow passage 44 and a second flow passage 45 in Fig. 3.
Fig. 9 is a comparison view of the thicknesses of fluid layers co-rotating along with a rotor 10 and a bearing 21.
Fig. 10 is a flow passage cross-sectional view of a first flow passage according to a second embodiment of the present invention.
Fig. 11 is a flow passage cross-sectional view of a first flow passage according to a third embodiment of the present invention.
Fig. 12 is a perspective cross-sectional view showing an air compressor 200 according to a fourth embodiment of the present invention.

### MODE FOR CARRYING OUT THE INVENTION

Hereinafter, a rotary electrical machine 1 according to embodiments of the present invention will be described with reference to the drawings. In the following figures, the same reference signs are assigned to the same portions, and repeated descriptions will be omitted. In addition, in this specification, the following description will be given based on the assumption that the directions of front, rear, left, right, up, and down are directions shown in the figures. The rotary electrical machine 1 of the present embodiment is suitable for use as a drive source for an air compressor; however, an object to be driven (driven device) in the present invention is not particularly limited. Incidentally, in the following description, the direction of a rotation axis Ax of a rotor 10 may be simply referred to as an "axial direction", and a rotation direction θ may be simply referred to as a "circumferential direction".

### First embodiment

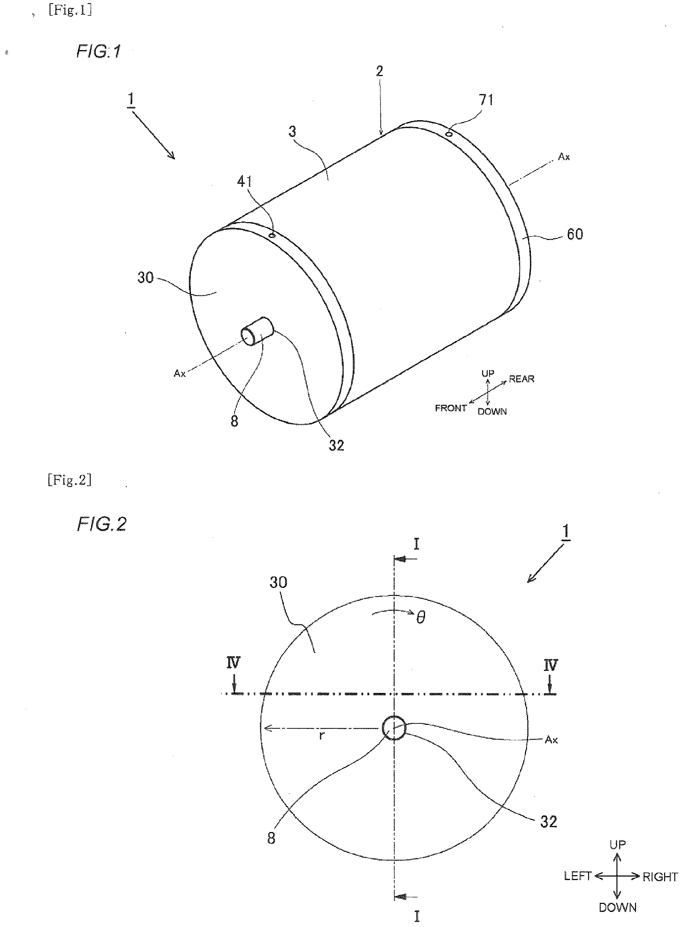

Fig. 1 is a perspective view of the rotary electrical machine 1 according to the present invention, and Fig. 2 is a front view of the rotary electrical machine 1 shown in Fig. 1. The rotary electrical machine 1 is an interior magnet synchronous motor, and is configured such that a rotor and a stator (not visible in the figure) are accommodated in a housing 2. The housing 2 is mainly composed of a body portion 3 having a cylindrical shape and having openings on a front side and a rear side, a front end bracket 30 attached to the opening on the front side of the body portion 3, and a rear end bracket 60 attached to the opening on the rear side of the body portion 3. In the present embodiment, the housing 2 is formed by dividing the housing 2 into three members (the body portion 3, the end bracket 30, and the end bracket 60). The end brackets 30 and 60 correspond to a "bracket portion" of the present invention. Incidentally, the manner in which the housing 2 is divided is optional.

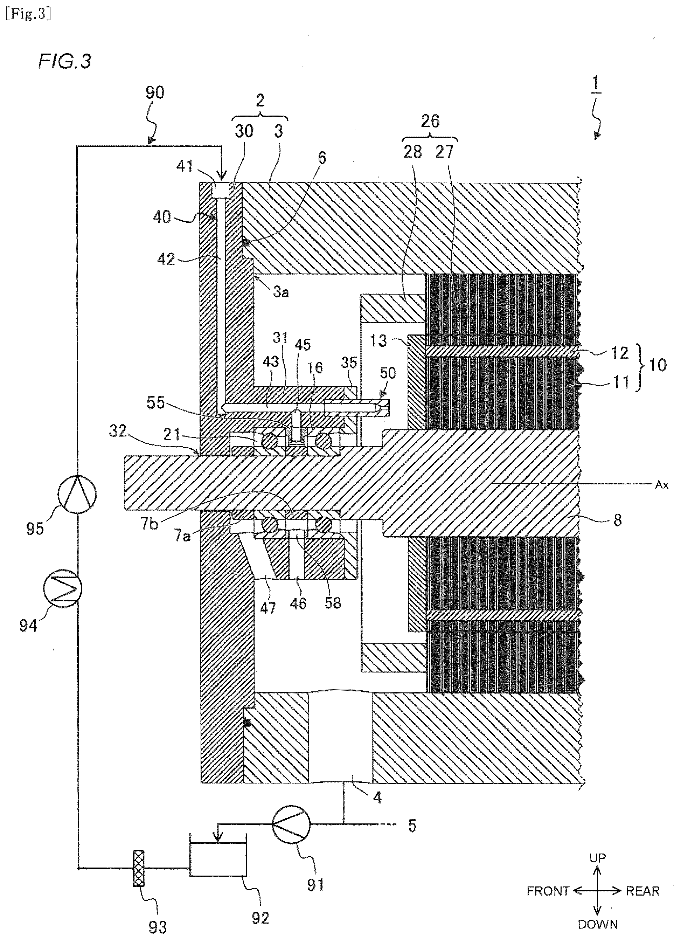

A through-hole 32 is formed in the front end bracket 30, and one end side of a rotating shaft 8 to which the rotor 10 (to be described later with reference to Fig. 3) is fixed protrudes to the outside of the housing 2. Two supply ports 41 and 71 for supplying a cooling medium are formed in the housing 2. The supply port 41 for supplying the cooling medium is formed at one location (here, on an upper side) on an outer peripheral surface of the end bracket 30 located on the front side when viewed in the direction of the rotation axis Ax. In addition, the supply port 71 for supplying the cooling medium is formed at one location (here, on the upper side) on an outer peripheral surface of the end bracket 60 located on the rear side when viewed in the direction of the rotation axis Ax. In this specification, as shown in Fig. 2, a radial direction of the rotor 10 is represented by r (+r indicating an outer peripheral side), the axial direction (rotation axis direction) of the rotating shaft 8 of the rotor 10 is represented by Ax, and the rotation direction of the rotor 10 is represented by θ.

Fig. 3 is a longitudinal cross-sectional view of an axial front half portion of the rotary electrical machine 1 (a cross-sectional view corresponding to portion I-I in Fig. 2). On the front side of the rotary electrical machine 1, the housing 2 is formed by the body portion 3, the outer side of which is manufactured as a cylindrical integral structure, and the end bracket 30 that closes a front opening 3a of the body portion 3. The through-hole 32 through which the rotating shaft 8 penetrates forward is formed in the end bracket 30, and a bearing accommodating portion 31 having a cylindrical shape is formed from around the through-hole 32 in the direction of the rotor 10 on the inner side. Since the bearing accommodating portion 31 is formed to hold two bearings 16 and 21, the bearing accommodating portion 31 corresponds to a "bearing holder" of the present invention. The bearing accommodating portion 31 is integrally manufactured from the same material as the end bracket 30. Incidentally, the bearing accommodating portion 31 and the end bracket 30 may not be integral but may be formed as separate pieces.

The rotor 10 is fixed to the rotating shaft 8, has a substantially columnar shape, and includes a rotor core 11, a permanent magnet 12, and a rotor end plate 13. A stator 26 includes a stator core 27 having a substantially cylindrical shape and an armature winding 28. The rotor core 11 and the stator core 27 are manufactured, for example, by laminating a plurality of thin electromagnetic steel sheets in the direction of the rotation axis Ax using a known method.

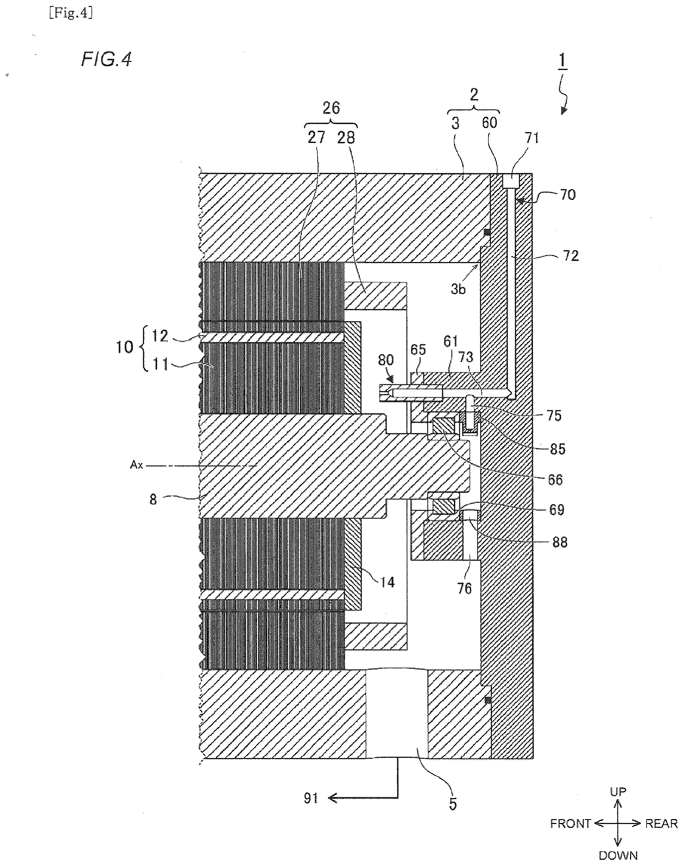

The stator 26 is fixed to an inner peripheral surface of the body portion 3, and the rotor 10 is rotatably supported by the bearing accommodating portion 31 of the end bracket 30 via the bearings 16 and 21. In addition, the end bracket 30 is fixed to the body portion 3 such that concentricity between the rotor 10 and the stator 26 is ensured. The method for fixing the end bracket 30 and the body portion 3 is optional, and for example, the end bracket 30 and the body portion 3 are fixed together using bolts (not shown). In addition, in order to prevent the entry of impurities into the inside of the rotary electrical machine 1 and leakage of the cooling medium, an O-ring 6 is interposed on a contact surface between the end bracket 30 and the opening portion 3a of the body portion 3. Carbon steel, stainless steel, aluminum alloy, or the like can be used as the material of the end brackets 30 and 60 (to be described later with reference to Fig. 4) and the body portion 3, and nonmagnetic stainless steel, aluminum, copper alloy, or the like can be considered as the material of the rotor end plates 13 and 14 (to be described later with reference to Fig. 4).

The rotor core 11 and the rotor end plates 13 and 14 (to be described later with reference to Fig. 4) are fixed to the rotating shaft 8 by press-fitting or shrink-fitting. Screwing, adhesion, welding, and the like can be considered as other methods for fixing the rotor core 11. The permanent magnet 12 is fitted to the rotor core 11, and may be additionally fixed thereto by adhesion or resin integral molding. The rotating shaft 8 functions as an output shaft for power transmission, and the rotor core 11 and the permanent magnet 12 function as a magnetic circuit of the rotor 10. The rotor end plate 13 functions a component for adjusting the static balance and dynamic balance of the rotor 10 by undergoing local mass reduction through cutting or the like. The stator 26 is manufactured by winding the armature winding 28 around the stator core 27, and functions to generate a rotating magnetic field in the stator core 27 by allowing a controlled current and voltage to pass through the armature winding 28, and to provide rotational power to the rotor 10.

The outer rings of the bearings 16 and 21 are fitted to the bearing accommodating portion 31 by a loose fit or a transition fit. In the present embodiment, the bearings 16 and 21 are double row combined angular contact ball bearings arranged back-to-back, and are arranged in two rows in the direction of the rotation axis Ax. However, the type of bearings or the number of bearings disposed is optional, and any single row or double row rolling bearings or other bearing means can also be applied. An outer ring spacer 55 and an inner ring spacer 7b are disposed between the bearings 16 and 21 in two rows. The outer ring spacer 55 is fitted to the bearing accommodating portion 31, and comes into contact with the outer rings of the bearing 16 and the bearing 21 on both axial surfaces. The inner ring spacer 7b is fitted to the rotating shaft 8, and comes into contact with the inner rings of the bearing 16 and the bearing 21 on both axial surfaces. In addition, the outer ring of the bearing 16 is pressed forward in the axial direction from a side closer to the rotor 10 (rear side) by an outer ring retainer 35, and the inner ring of the bearing 21 is pressed in the axial direction toward the side closer to the rotor 10 (rear side) by an inner ring retainer 7a. In this manner, by operating the rotary electrical machine 1 in a state in which the bearings 16 and 21 are held by a predetermined preload, frictional loss or vibration and noise can be reduced, and the fatigue life can be extended.

A cooling medium flow passage 40 is formed in the end bracket 30. The cooling medium flow passage 40 extends from the supply port 41 to a nozzle 50 and the outer ring spacer 55, and is formed to include an introduction flow passage 42 extending in the radial direction; an axial flow passage 43 extending through the inside of the bearing accommodating portion 31 from an end portion of the introduction flow passage 42 in the direction of the rotation axis Ax, the end portion being close to the rotation axis Ax; and a second flow passage 45 that branches off downward midway along the axial flow passage 43. Here, the "axial direction" is not required to be completely parallel to the rotation axis Ax, but allows for a certain range of deviation, and the flow passage may deviate from the parallel state. The nozzle 50 serving as a first spray unit for the cooling medium is provided at an end portion of the axial flow passage 43 that is close to the rotor 10. Namely, the nozzle 50 is provided on an end face of the bearing holder (bearing accommodating portion 31) in a longitudinal direction (the direction of the rotation axis Ax).

The outer ring spacer 55 serving as a second spray unit for the cooling medium is provided downstream of the second flow passage 45. Here, the axial flow passage 43 is disposed at only one location in an upper portion of the bearing accommodating portion 31 having a substantially cylindrical shape when viewed in the circumferential direction. It is preferable that the position in the circumferential direction is set in the vicinity of the intersection of I-I cross-section and IV-IV cross-section when viewed in the direction of the rotation axis Ax as shown in Fig. 2. By disposing axial flow passage 43 in this manner, the path extending from the supply port 41 formed at an upper end of the end bracket 30 to the axial flow passage 43, namely, the introduction flow passage 42 can be disposed at the shortest distance in the radial direction centered on the central axis Ax.

The cooling medium (not shown), the temperature of which is adjusted, is pressure-fed from outside the rotary electrical machine 1 to the supply port 41 at a predetermined pressure. A portion of the cooling medium pressure-fed through the supply port 41 flows through the introduction flow passage 42 and the axial flow passage 43 to the nozzle 50, is sprayed from the nozzle 50, and reaches an end face of the rotor 10 orthogonal to the rotating shaft 8, here, the rotor end plate 13. In addition, the remainder of the pressure-fed cooling medium branches off from the axial flow passage 43, reaches the outer ring spacer 55 serving as a second spray unit, and is sprayed from the outer ring spacer 55 to reach the bearings 16 and 21, thereby serving as means for exhausting heat. In this manner, the cooling medium (not shown) is supplied from outside the housing 2 mainly to two portions (the rotor 10 and the bearings 16 and 21). Thereafter, the cooling medium remaining on a radial inner side of the bearing accommodating portion 31 is guided to a vertical lower side of the housing 2 through a through-hole 58 of the outer ring spacer 55 provided in the vicinity of a lower side between the bearings 16 and 21 and a first through-hole 46 and through a second through-hole 47, which is provided on an outer side of the rotary electrical machine 1 in the axial direction with respect to the first through-hole 46, by gravity and negative pressure or the like generated by a suction pump 91, and is discharged to the outside of the housing 2 through a discharge port 4 and a discharge port 5 (see Fig. 4). In the present embodiment, it is assumed that lubricating oil is used as the cooling medium; however, cooling media other than oil, such as HFC to which a lubricant is added, can also be applied.

The cooling medium that has become hot after cooling the predetermined portions moves to the vicinity of an inner bottom surface of the body portion 3 due to gravity, and is suctioned through the discharge port 4 at a predetermined negative pressure. In order to form a circulation circuit for the cooling medium, an external cooling medium circuit 90 is connected to the rotary electrical machine 1. The external cooling medium circuit 90 suctions the cooling medium inside the rotary electrical machine 1 through the discharge ports 4 and 5 (see Fig. 4 to be described later) using the suction pump 91, and temporarily stores the cooling medium in a tank 92 for the cooling medium. The cooling medium stored in the tank 92 is suctioned out at a predetermined pressure by a pump 95, has impurities removed by a filter 93, and then is sent to a heat exchanger 94. In the heat exchanger 94, the temperature of the cooling medium is adjusted to a predetermined low temperature by heat exchange with the outside air, and thereafter, the cooling medium is supplied again to the supply ports 41 and 71 (see Fig. 4 to be described later) through pipes. As described above, the cooling medium is supplied into the internal space of the rotary electrical machine 1, and cools predetermined cooling target portions.

Fig. 4 is a longitudinal cross-sectional view of a rear half portion of the rotary electrical machine 1 (a cross-section corresponding to portion I-I in Fig. 2). The rear half portion of the rotary electrical machine 1 may be basically configured in a shape symmetrical to the front half; however, the rear half portion can also be configured by changing the shape or number of bearings 66, the shape of a bearing accommodating portion 61, or the like. A rear opening 3b of the body portion 3 of the housing 2 is closed by the rear end bracket 60. Since the rotating shaft 8 does not penetrate through the rear side of the rotary electrical machine 1, a through-hole penetrating through the end bracket 60 in the direction of the rotationaxis Ax is not formed. The bearing accommodating portion 61 having a cylindrical shape that protrudes forward in the direction of the rotation axis Ax is formed in the vicinity of the rotating shaft on the inner side of the end bracket 60, and holds the bearing 66 thereinside. The bearing accommodating portion 61 corresponds to a "rear bearing holder" of the present invention. Namely, in the present embodiment, the bearing holder is provided on each of the front side and the rear side of the rotor 10. Here, the number of the bearings 66 held in the bearing accommodating portion 61 is one, and a cylindrical roller bearing is used as the bearing 66. A length of the bearing accommodating portion 61 in the direction of the rotation axis Ax is shorter than a length of the bearing accommodating portion 31 shown in Fig. 3 since the number of the bearings 66 is one. An outer ring 69 of the bearing 66 is fitted to the bearing accommodating portion 61 by a loose fit or a transition fit.

Similarly to the front end bracket 30 (see Fig. 3), a cooling medium flow passage 70 is also formed inside the end bracket 60. The cooling medium flow passage 70 is formed to include an introduction flow passage 72 extending in the radial direction from the supply port 71; an axial flow passage 73 extending forward in the direction of the rotation axis Ax from an end portion of the introduction flow passage 72 that is close to the rotation axis Ax; and a second flow passage 75 that branches off midway along the axial flow passage 73. The axial flow passage 73 is disposed at only one location in an uppermost portion of the bearing accommodating portion 61 having a substantially cylindrical shape when viewed in the circumferential direction. A nozzle 80 serving as a first spray unit for the cooling medium is provided at an end portion of the axial flow passage 73 that is close to the rotor 10. An outer ring spacer 85 serving as a second spray unit for the cooling medium is provided downstream of the second flow passage 75. The outer ring spacer 85 functions to maintain a predetermined distance between a wall surface of the end bracket 60 and the rear side of the outer ring of the bearing 66, and also functions as a nozzle for spraying the cooling medium in a predetermined direction. The front side of the outer ring 69 of the bearing 66 is held by an outer ring retainer 65.

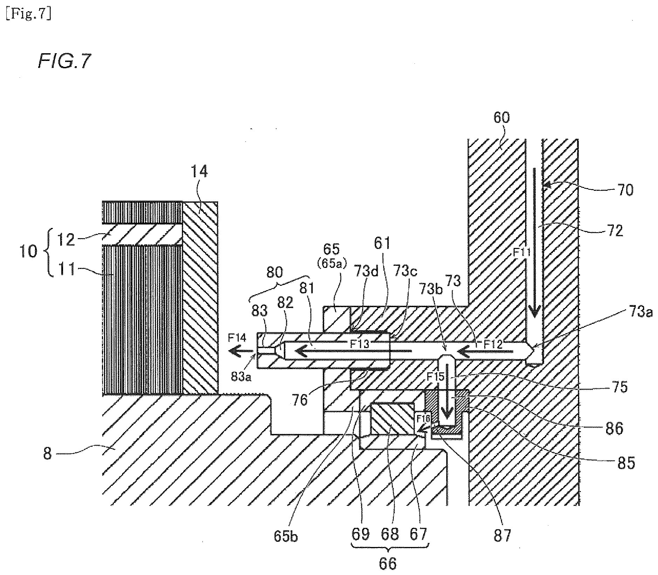

The cooling medium sprayed forward from the nozzle 80 reaches the rotor end plate 14. The cooling medium that reaches the rotor end plate 14 and removes heat from the rotor end plate 14 falls to the vicinity of the inner bottom surface of the body portion 3 due to gravity. In addition, although details will be described later with reference to Fig. 7, the cooling medium sprayed from the outer ring spacer 85 serving as a second spray unit reaches the bearing 66. A through-hole 88 is formed on the lower side of the outer ring spacer 85 behind the bearing 66, and the through-hole 88 communicates with a through-hole 76 formed in the bearing accommodating portion 61, so that the excess cooling medium that has removed heat from the bearing 66 falls onto the inner bottom surface of the body portion 3. The cooling medium is supplied from outside the housing 2 in this manner, thereby serving as means for removing exhaust heat from the vicinity of the rotor 10 or the bearing 66. The cooling medium that has accumulated in an inner bottom portion of the housing 2 is suctioned at a predetermined negative pressure by the suction pump 91 through the discharge port 5 formed on the lower side of the body portion 3, and returns to the tank 92 (see Fig. 3) for the cooling medium.

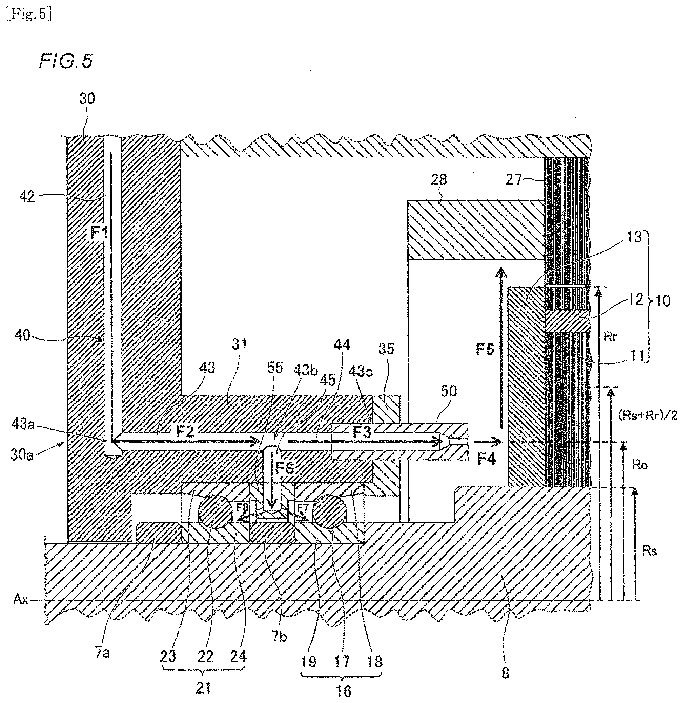

Fig. 5 is a partial enlarged view of the cooling medium flow passage 40 of the rotary electrical machine 1 shown in Fig. 3. The cooling medium flow passage 40 is a flow passage extending from the supply port 41 (see Fig. 3), which opens on an end face of the end bracket 30 that faces the outside of the rotary electrical machine 1, to the vicinity of the rotor 10 and the bearings 16 and 21 that are cooling targets. The cooling medium pressure-fed from the supply port 41 (see Fig. 3) toward the inside of the rotary electrical machine 1 flows as indicated by F1. Incidentally, in the present embodiment, the supply port 41 opens at a vertical end portion (upper end) of a radial end face of the end bracket 30; however, since the cooling medium is pressure-fed, the supply port 41 may open anywhere on the radial end face. The cooling medium flow passage 40 is configured such that the introduction flow passage 42 extends from a radial outer side to the radial inner side and is connected to the axial flow passage 43 at a connecting point 43a, and the cooling medium flows as indicated by F2. The cross-sectional shapes and the sizes of the cross-sectional areas of the introduction flow passage 42 and the axial flow passage 43 may be the same. The two flow passages 42 and 43 can be easily formed by drilling with a drill.

The second flow passage 45 extending downward as indicated by a flow F6 branches off at a branch point 43b midway along the axial flow passage 43. The axial flow passage 43 downstream of the branch point 43b is connected to the nozzle 50 as a first flow passage for a flow F3. The nozzle 50 has a shape in which an opening at the tip is narrowed, and the cross-section of the flow F3 is narrowed, so that the cooling medium is sprayed onto the rotor end plate 13 as a high-speed flow F4. Meanwhile, a flow F6 of the cooling medium to the second flow passage 45 downstream of the branch point 43b flows as indicated by a flow F7 from the outer ring spacer 55, which also functions as a nozzle., to reach the first bearing 16, and flows as indicated by a flow F8 to reach the second bearing 21.

In the present embodiment, the bearing accommodating portion 31 is formed in the end bracket 30, and the axial flow passage 43 for supplying the cooling medium is provided inside the bearing accommodating portion 31. Furthermore, since the axial flow passage 43 branches off at the branch point 43b into a first flow passage 44 and the second flow passage 45, the cooling medium can be supplied to a plurality of cooling targets by one flow passage (axial flow passage 43). Moreover, since the axial flow passage 43 is formed inside the bearing accommodating portion 31, there is no need to dispose a separate pipe outside the bearing accommodating portion 31. Incidentally, the position where the flow passage (introduction flow passage 42) for supplying the cooling medium from the rotary electrical machine 1 to the axial flow passage 43 is provided is optional. In the present embodiment, since a flow passage can be formed by drilling a hole from the radial outer side to the radial inner side of the end bracket 30, the introduction flow passage 42 is formed in the radial direction; however, the introduction flow passage 42 can also be disposed as a separate conduit. For example, the introduction flow passage 42 may be connected to an outer surface (the vicinity of arrow 30a) of the end bracket 30 that is located at the shortest distance from a portion of an axial end face (connecting point 43a) on an outer side of the rotary electrical machine 1.

An angular contact ball bearing including a number of rolling elements 17 such as balls between an outer ring 18 and an inner ring 19 can be used as the first bearing 16. In addition, an angular contact ball bearing including a number of rolling elements 22 such as balls between an outer ring 23 and an inner ring 24 can be used as the second bearing 21. Here, the outer ring 18 and the outer ring 23 are disposed such that the disposition and direction of the contact angles are opposite. The outer ring spacer 55 provided between the outer ring 18 of the first bearing 16 and the outer ring 23 of the second bearing 21 not only functions to maintain the distance between the outer rings 18 and 23 constant, but also functions as a second spray unit (nozzle) for the cooling medium indicated by arrow F6 passing through the second flow passage. The inner ring spacer 7b having a cylindrical shape is provided between the inner ring 19 of the first bearing 16 and the inner ring 24 of the second bearing 21. In addition, the movement of the front side of the inner ring 24 of the second bearing 21 toward an axial front side of the bearing 21 is restricted by the inner ring retainer 7a having a cylindrical shape.

In the present embodiment, the target position of the spray from the first spray unit 50 is a position where the rotor 10 first collides with the extension line of the first flow passage formed by the axial flow passage 43, and is located on a side surface of the rotor 10 on which the rotor end plate 13 is located. When the rotor end plate 13 has a smaller diameter than the rotor core 11 or the rotor end plate 13 is not provided, the rotor core 11 or the permanent magnet 12 may be set as the spray target position. The target positions of the second spray unit 55 are the inner ring 19 or the rolling elements 17 of the bearing 16 and the inner ring 24 or the rolling elements 22 of the bearing 21. However, the target positions of the second spray unit 55 may be the outer rings 18 and 23.

The first spray unit 50 is set to have a flow speed component in the axis direction, and as indicated by arrow F4, the cooling medium is sprayed in a direction substantially parallel to the rotation axis Ax of the rotor 10, and is applied to a surface of the rotor 10 perpendicular thereto (rotor end plate 13). Thereafter, as indicated by arrow F5, the cooling medium propagates mainly outward in the radial direction while rotating in the circumferential direction due to the centrifugal force of the rotating rotor 10. The spray target position of the first spray unit 50 indicated by arrow F4 is located at a radius Ro from the rotation axis Ax. The distance of the spray target position from the central axis (rotation axis) Ax of the rotating shaft 8 is larger than an outer radius Rs of the rotating shaft 8 at the axial position where the rotating shaft 8 is fitted to the rotor core 11 and smaller than an outer radius Rr of the rotor core 11, and is set to be smaller than the position of the approximately center of a radial range (= (Rs + Rr)/2) occupied by a front end face of the rotor core 11. In this manner, the spray target position indicated by arrow F4 is set in an inner region closer to the rotating shaft 8 than to the vicinity of the center of the rotor core.

The cooling medium adhering to the rotor end plate 13 removes heat from the rotor core 11 and the permanent magnet 12, which are main heat-generation sources of the rotor 10, via the rotor end plate 13. After the cooling medium reaches an outer peripheral surface of the rotor end plate 14 as indicated by arrow F4, the cooling medium scatters to disperse in the radial direction as indicated by arrow F5 while rotating due to centrifugal force, is applied to an axial end portion of the armature winding 28, and cools heat generated by the passage of a current through the coil 28. Thereafter, the cooling medium is guided to the vertical lower side of the housing 2 by gravity and negative pressure or the like generated by the suction pump 91, and is discharged to the outside of the housing 2 through the discharge port 4 (see Fig. 3) and the discharge port 5 (see Fig. 4).

A portion of the cooling medium sprayed from the outer ring spacer 55 that is the second spray unit is applied to the bearing 16, is stirred in the circumferential direction by the rotation of the rolling elements 17 and the inner ring 19, and forms lubricating films between the rolling elements 17 and both the inner ring 19 and the outer ring 18 throughout the entirety of the bearing 16 to provide lubrication. Similarly, the remainder of the cooling medium sprayed from the outer ring spacer 55 is applied to the bearing 21, is stirred in the circumferential direction by the rotation of the rolling elements 22 and the inner ring 24, and forms lubricating films between the rolling elements 22 and both the inner ring 24 and the outer ring 23 throughout the entirety of the bearing 21 to provide lubrication. in this manner, by continuously spraying the cooling medium, the temperature of which is adjusted, through the cooling medium flow passage 40, heat generated in the bearings 16 and 21 due to mechanical loss can be cooled.

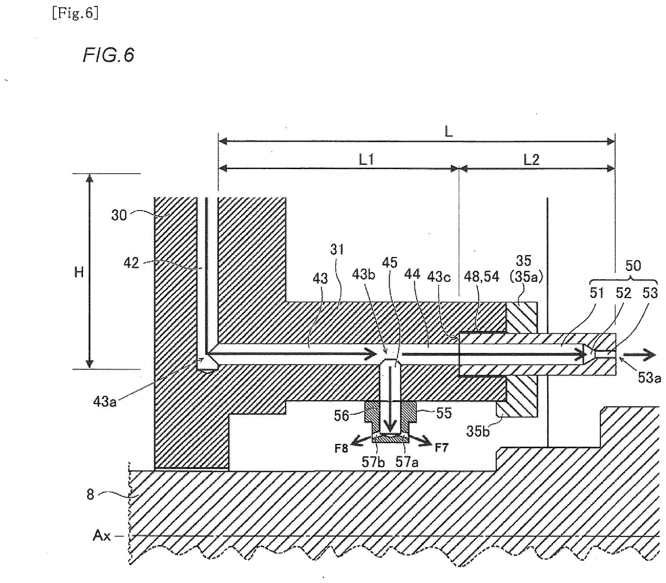

Fig. 6 is a further enlarged view of the vicinity of the bearing accommodating portion 31 of the rotary electrical machine 1 shown in Fig. 5. In Fig. 6, the two bearings 16 and 21 are not shown. A length of the introduction flow passage 42, namely, a length from the supply port 41 (see Fig. 3) to the connecting point 43a is H. A length of the axial flow passage 43 extending in the direction of the axis Ax from the connecting point 43a is L1. In addition, a flow passage having a length L2 is added at the tip of the axial flow passage 43 by the nozzle 50. Therefore, a length from the connecting point 43a to an opening 53a for spray is L (= L1 + L2). It is preferable that the length L1 is larger than the length L2, and by configuring the lengths L1 and L2 in the relationship of L1 > L2, the nozzle 50 can be made smaller, and the manufacturability and assemblability can be improved.

The nozzle 50 is formed as a separate component from the end bracket 30, and is such that each of a large-diameter portion 51 having the same diameter as the cross-section of the axial flow passage 43, a small-diameter portion 53 having a reduced cross-section, and a tapered portion 52 formed to narrow a flow passage from the large-diameter portion 51 to the small-diameter portion 53 in a funnel shape is formed in a columnar member. Here, the shape of the opening 53a at the tip of the small-diameter portion 53 is a circular shape. A male thread 54 is formed on a part of an outer portion of the nozzle 50, and is screwed and connected to an attachment hole 48 of the bearing accommodating portion 31, a female thread being formed on the attachment hole 48, and care is taken to prevent the cooling medium from leaking by using seal tape, a seal washer, or the like. The outer ring retainer 35 has a shape in which a substantially annular portion 35a and a body portion 35b extending forward from an inner peripheral end portion of the annular portion are integrally manufactured. Incidentally, although not shown in Fig. 6, when the nozzle 50 is screwed to the bearing accommodating portion 31, the outer ring retainer 35 is also fastened together using bolts or the like, so that the outer ring retainer 35 is also be fixed.

A through-hole 56 communicating with the second flow passage 45 is formed in the outer ring spacer 55 that is the second spray unit. A lower end face of the through-hole 56 is closed, and a first spray hole 57a penetrating through the outer ring spacer 55 rearward from the vicinity of the lower end face and a second spray hole 57b penetrating therethrough forward therefrom are formed. The cooling medium is sprayed obliquely downward, namely, toward the inner ring 19 of the first bearing 16 from the spray hole 57a as indicated by arrow F7, and the cooling medium is sprayed obliquely forward, namely, toward the inner ring 24 of the second bearing 21 from the spray hole 57b as indicated by arrow F8. The cross-sectional size of the spray holes 57a and 57b may be set to be sufficiently smaller than the cross-sectional size of the through-hole 56, and the sum of the cross-sectional areas of the spray hole 57a and 57b may be set to be smaller than the cross-sectional area of the second flow passage 45.

Fig. 7 is a partial enlarged view of the cooling medium flow passage 70 of the rotary electrical machine 1 shown in Fig. 4. The introduction flow passage 72 stretches to extend in a vertical direction from the supply port 71 (see Fig. 4) to a connecting point 73a, and the axial flow passage 73 extending forward in the direction of the axis Ax from the connecting point 73a. The nozzle 80 is connected to the tip of the axial flow passage 73. In addition, the second flow passage 75 that branches off downward from a branch point 73b midway along the axial flow passage 73 is formed. The outer ring spacer 85 serving as a second spray unit for the cooling medium is provided downstream of the second flow passage 75. Here, only one axial flow passage 73 is disposed in an upper portion of the bearing accommodating portion 61 having a substantially cylindrical shape when viewed in the circumferential direction. It is preferable that the disposition in the circumferential direction is set in the vicinity of the intersection point of I-I cross-section and IV-IV cross-section when viewed in the direction of the rotation axis Ax as shown in Fig. 2.

The nozzle 80 is formed as a separate component from the bearing accommodating portion 61, and is such that each of a large-diameter portion 81 having the same diameter as the cross-section of the axial flow passage 73, a small-diameter portion 83 having a reduced cross-section, and a tapered portion 82 formed to narrow a portion from the large-diameter portion 81 to the small-diameter portion 83 in a funnel shape is formed in a columnar member. Here, the shape of an opening 83a of the small-diameter portion 83 is a circular shape. A male threaded portion (not shown) is formed on a part of an outer portion of the nozzle 80, and is screwed and connected to an attachment hole 76 of the bearing accommodating portion 61, a female thread being formed on the attachment hole 76, and care is taken to prevent the cooling medium from leaking by using seal tape, a seal washer, or the like. Incidentally, although not shown in Fig. 7, when the nozzle 80 is screwed to the bearing accommodating portion 31, an outer ring retainer 65 may also be fastened together.

The outer ring retainer 65 is formed by a substantially annular portion 65a and a cylindrical portion 65b extending forward from an inner peripheral end portion. The outer ring spacer 85 forms a second nozzle, and includes a hole 86 connected to the second flow passage 75, and a through-hole 87 that is elongated from the vicinity of a bottom surface of the hole 86 is connected. The diameter of the through-hole 87 is formed to be sufficiently small compared to the cross-sectional size of the hole 86.

The cooling medium flowing into the introduction flow passage 72 from the supply port 71 (see Fig. 4) flows from the radial outer side toward the radial inner side as indicated by F11, changes direction at the branch point 73b to flow to the axial flow passage 73 as indicated by F12, and is sprayed from the nozzle 80 onto a side surface of the rotor end plate 14 on the rear side as indicated by flows F13 and F14. The second flow passage 75 indicated by F15 branches off from the branch point 73b of the introduction flow passage 72, and the cooling medium that has reached the inside of the outer ring spacer 85 that is the second nozzle is sprayed onto an inner ring 67 and rolling elements 68 of the bearing 66 in the direction of arrow F16. The cooling medium that has become hot as a result of removing heat from the vicinity of the bearing 66 that is a cooling target falls onto the bottom portion inside the housing 2 due to gravity, and is discharged to the outside of the rotary electrical machine 1 through the discharge port 5 (see Fig. 4) at a predetermined negative pressure.

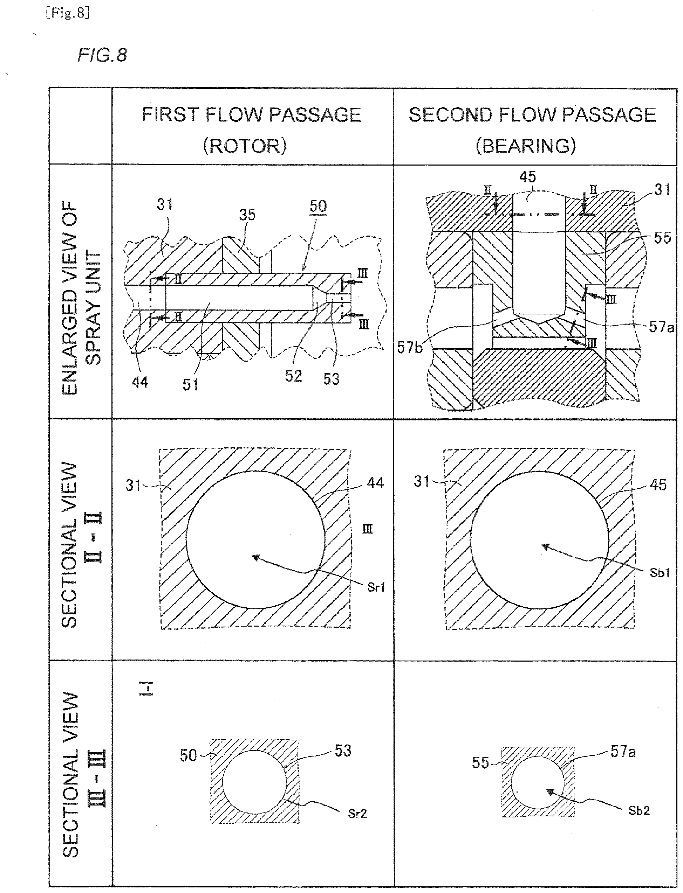

Fig. 8 is a comparison view of the flow passage cross-sections of the first flow passage 44 and the second flow passage 45. A flow passage cross-sectional area Sr2 of the nozzle 50 that is the first spray unit and a flow passage cross-sectional area Sb2 of the nozzle 55 that is the second spray unit are provided to be smaller than a flow passage cross-sectional area Sr1 of the first flow passage 44 and a flow passage cross-sectional area Sb1 of the second flow passage 45 in the vicinity of the branch point 43b, respectively. In addition, the flow passage cross-sectional area Sb2 of the nozzle 55 that is the second spray unit is set to be smaller than the flow passage cross-sectional area Sr2 of the nozzle 50 that is the first spray unit.

Next, the functional effects, and principle of the present embodiment will be described. The cooling medium flow passage 40 is formed to pressure-feed the cooling medium from the single supply port 41 machined into the end bracket 30, and to branch at the branch portion 43b into the first flow passage 44 that sprays the cooling medium onto the rotor end plate 14 and the second flow passage 45 that sprays the cooling medium onto the bearings 16 and 21. Accordingly, the cooling medium can be supplied to the rotor end plate 14 and the bearings 16 and 21 without installing addition pipe members inside the rotary electrical machine 1, the device can be simplified, and the cost can be reduced, so that the disassembly becomes easier and good maintainability is provided.

The axial flow passage 43 connected to the introduction flow passage 42 forms a flow passage extending from the branch point 43b to the first spray unit (nozzle 50) as the first flow passage 44. Namely, the first flow passage 44 refers to a portion of the axial flow passage 43 downstream of the branch point 43b. By forming the first flow passage 44, the cooling medium can be easily routed to the vicinity of the rotor end plate 14, and the cooling medium can be applied to the end face of the rotor 10, so that the rotor 10 can be efficiently cooled without being obstructed by a fluid layer co-rotating around the rotor 10. Furthermore, since the flow passage formed by the axial flow passage 43 passes through an outer diameter side of the bearings 16 and 21 of the bearing accommodating portion 31 in the axial direction, the flow passage also has the effect of cooling heat transferred from the outer ring 18 of the bearing 16 and the outer ring 23 of the bearing 21 to the bearing accommodating portion 31 or the end bracket 30.

In this manner, the cooling mechanism of the present embodiment can lower the temperature of the bearings 16 and 21 to maintain the bearing clearance at an appropriate level, so that a reduction in mechanical loss and an improvement in fatigue life can be realized. In addition, a mechanism for spraying the cooling medium onto the bearings 16 and 21 by forming the second flow passage 45 extending downward (radial direction) from the branch point 43b without employing a complex pipe configuration, and using the outer ring spacer 55 with a simple structure attached to the second flow passage 45. The spray mechanism can be easily routed to the vicinity of the bearings 16 and 21. Accordingly, the attenuation of the spray flow speed of the cooling medium can be kept small to prevent the spread of the cooling medium, and the cooling medium can be applied to the bearings 16 and 21 without being obstructed by the fluid layer co-rotating around the bearings 16 and 21, thereby reliably cooling the bearings 16 and 21.

The first spray unit 50 is provided in a direction having a flow speed component in the axial direction, and applies the cooling medium to the surface of the rotor 10 substantially perpendicular to the rotation axis Ax. At this time, after the cooling medium is applied to the rotor 10, the cooling medium propagates and spreads in the circumferential direction and the radial direction due to frictional force and centrifugal force, and the cooling medium is adsorbed over a wide area. For example, when the cooling medium is sprayed inward in the radial direction onto a cylindrical surface of the rotating shaft 8, the cooling medium is applied to the rotor 10, and then propagates and scatters in only the circumferential direction, so that the absorption area for the cooling medium is limited. As described above, the present embodiment can improve the cooling performance.

The first spray unit 50 applies the cooling medium to the rotor end plate 14, and the rotor end plate 14 is provided in contact with the rotor core 11 and the permanent magnet 12 in the axial direction. In the rotor 10, the permanent magnet 12 generates heat due to eddy current loss, and at high temperature, thermal demagnetization causes the performance deterioration of the rotary electrical machine 1. The rotor core 11 generates heat due to eddy current loss and hysteresis loss, and at high temperature, due to a further increase in loss caused by thermal stress, abnormal preload on the bearings 16 and 21 caused by thermal expansion in the axial direction due to the transfer of heat to the rotating shaft 8, and a reduction in the operating internal clearance of the bearings 16 and 21 caused by the transfer of heat to the inner ring 19, an increase in mechanical loss and a reduction in fatigue life occur, thereby causing performance deterioration of the rotary electrical machine 1. By applying the cooling medium to the rotor end plate 14, the rotor core 11 and the permanent magnet 12 can be cooled via the rotor end plate 14, and since the rotor end plate 14 and both the rotor core 11 and the permanent magnet 12 are provided in contact with each other in the axial direction, the rotor core 11 and the permanent magnet 12 can be efficiently cooled, and as a result, the above-described performance deterioration can be prevented, and the performance of the rotary electrical machine 1 can be improved. Incidentally, even when the rotor end plate 14 is not provided between the first spray unit 50 and the rotor core 11 (the same applies when the rotor end plate 14 has a smaller diameter than the extension line of the centerline of the first spray unit 50 or is not present), the cooling medium is directly applied to the rotor core 11 or the permanent magnet 12, so that an equal or greater cooling effect can be obtained.

The flow passage cross-sectional area Sr2 of the first spray unit 50 and the flow passage cross-sectional area Sb2 of the second spray unit 55 are provided to be smaller than the flow passage cross-sectional area Sr1 of the first flow passage and the flow passage cross-sectional area Sb1 of the second flow passage 45 in the vicinity of the branch point 43b, respectively. Accordingly, the cooling medium can be sprayed onto the bearings 16 and 21 and the rotor 10 at high speed without significantly spreading, and the cooling medium can penetrate through the surrounding fluid layer co-rotating along therewith and can be reliably applied thereto, thereby cooling the bearings 16 and 21 and the rotor 10.

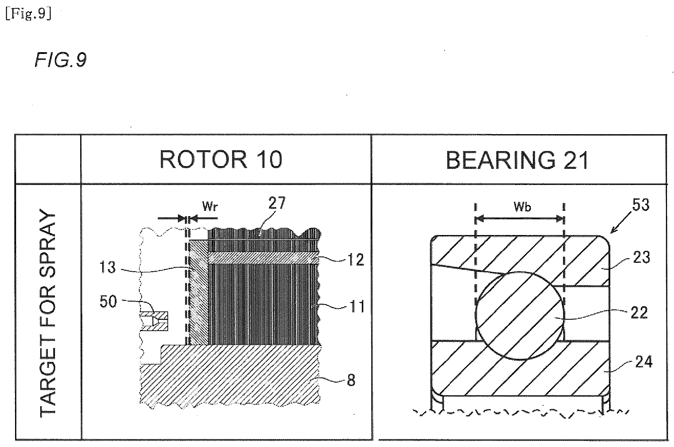

The flow passage cross-sectional area Sb2 of the second spray unit 55 is provided to be smaller than the flow passage cross-sectional area Sr2 of the first spray unit 50. Fig. 9 is a comparison view of the thicknesses of fluid layers co-rotating along with the rotor 10 and the bearing 21. The bearing 21 rotates with the rolling elements 22 disposed at equal intervals in the circumferential direction. Therefore, the surrounding fluid is stirred by the rolling elements 22, and a fluid layer rotating at high speed and having a thickness Wb equal to the thickness of the rolling elements 22 in the axial direction is formed. Meanwhile, at an axial end face of the rotor end plate 14, only a fluid layer having a thickness Wr on the very surface layer rotates at high speed depending on the surface roughness and the viscosity of the surrounding fluid. Since Wb is significantly larger than Wr, the spray speed required to avoid being obstructed by the fluid layer is higher for the bearing 21. At the target position of the cooling medium, the rotor 10 is located on the outer diameter side with respect to the bearing 21, and even when the circumferential speed is high, the required spray speed is higher for the bearing 21. Therefore, by providing the flow passage cross-sectional area Sb2 of the second spray unit 55 to be smaller than the flow passage cross-sectional area Sr2 of the first spray unit 50, the amount of the cooling medium applied to the bearings 16 and 21 can be increased while reliably applying the cooling medium to the rotor 10, and the cooling performance can be improved. The first spray unit 50 and the second spray unit 55 are provided such that the flow passage cross-sectional shapes are a circular shape. Accordingly, the pressure loss in the cooling medium flow passage 40 can be reduced, the output of the pump 95 can be reduced, and an inexpensive and small external cooling medium circuit 90 can be configured.

The cooling structure of the rotary electrical machine has been described using the embodiment. The features described with reference to Figs. 8 and 9 is also similarly applied to the cooling medium flow passage 70 on the rear side shown in Figs. 4 and 7. The present embodiment assumes an interior magnet synchronous motor; however, the same effects can also be obtained with the same configuration as in the present disclosure in other types of motors and generators. In the case of a surface permanent magnet synchronous motor, since only the radial position and shape of the magnet differ, the same effects can be obtained based on the same principle. In the case of an induction motor and a wound-field motor, the field source is not a permanent magnet but a rotor conductor, and during operation, a field current passes therethrough and copper loss occurs in accordance with Ohm's law, thereby generating heat. When the temperature rises, the performance deteriorates due to a further increase in copper loss caused by an increase in the resistivity of the rotor conductor, and therefore, the performance deterioration can be prevented by applying the same configuration. In a synchronous reluctance motor, a switched reluctance motor, and the like as well that do not have a field source in a rotor and include only a rotating shaft and a rotor core as a minimum configuration, since performance deterioration occurs due to the generation of heat in the rotor core as described above, the same effects can be obtained with the same cooling configuration. As described above, the same effects can be obtained with this configuration for any rotary electrical machine such as a motor or generator that has a heat-generation factor in the rotor.

### Second embodiment

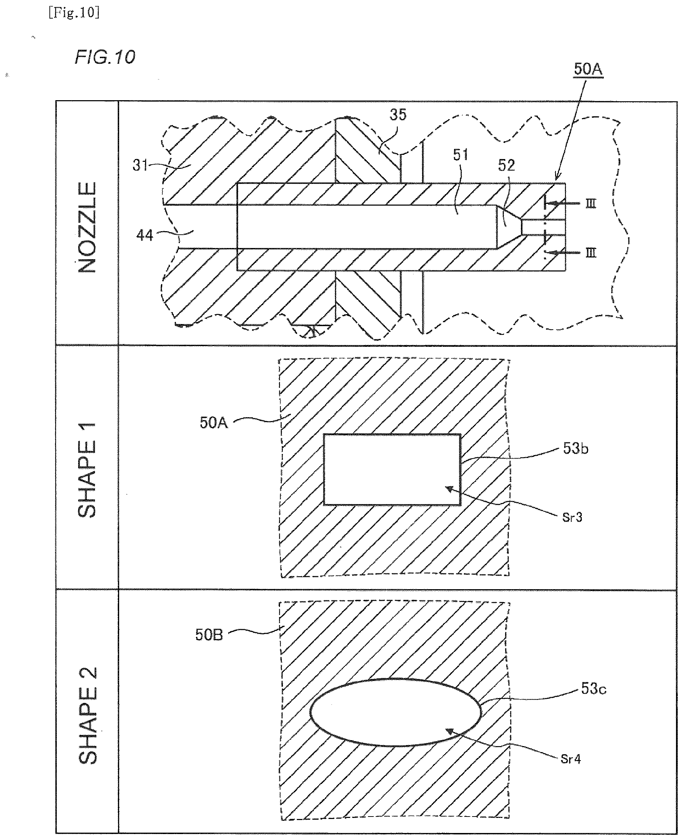

Fig. 10 shows a second embodiment in which the shape of the first spray unit is changed, and is a view corresponding to plane IV-IV in Fig. 2. In this embodiment, the shape of a nozzle 50A is partially different from the shape of the nozzle 50 of the first embodiment. In the nozzle 50A shown in Shape 1, the shape of an opening 53b is a substantially rectangular shape, and for example, the sides extending in a horizontal direction are long sides. The spread of the cooling medium after spray can be suppressed in only one direction by the shape of the opening 53b, and compared to when the opening 53b is made larger in a circular shape or a square shape, the adsorption area for the cooling medium can be increased without significantly reducing the spray speed. In addition, the cooling performance of the rotary electrical machine 1 can be further improved in addition to the functional effects of the first embodiment.

Shape 2 shown in Fig. 10 is a modification example of the second embodiment. Here, an opening 53c does not have a rectangular shape but has an elliptical shape with the major axis extending in the vertical direction. In this manner, the degree of spread of the cooling medium after spray in another direction can be reduced while increasing the degree of spread of the cooling medium in one specific direction. Incidentally, the flow passage shapes of the small-diameter portions having the opening 53b with a flow passage cross-sectional area Sr3 and the opening 53c with a flow passage cross-sectional area Sr4 may be the same, and the shape of the tapered portion 52 may be determined such that the portion from the large-diameter portion 51 to the small-diameter portion is connected by a smooth curved surface.

### Third embodiment

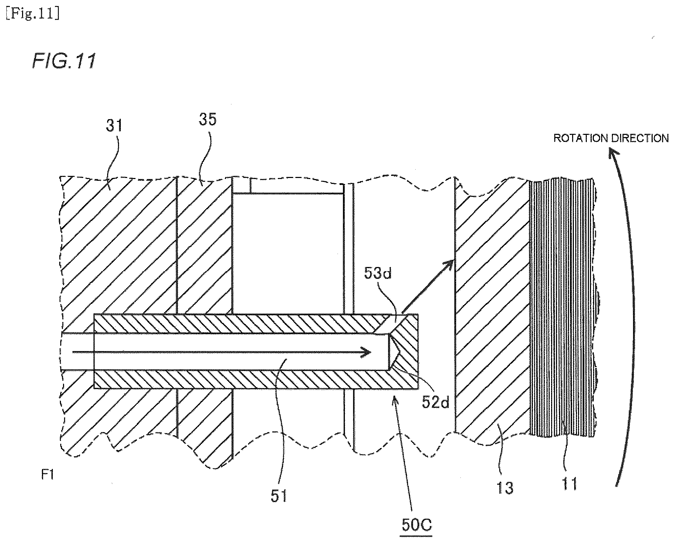

Fig. 11 shows a third embodiment in which the shape of the first flow passage is changed, and is a view corresponding to IV-IV cross-section in Fig. 2. In this example, only nozzle 50C is different from that in the first embodiment. Configurations other than the nozzle 50C are the same as in the first embodiment. In the nozzle 50C, the large-diameter portion 51 is shaped not to penetrate in the axis direction, and a thin through-hole 53d provided to be inclined at a predetermined angle in the rotation direction of the rotor 10 is formed near the vicinity of a tip surface 52d. Therefore, when the cooling medium sprayed from the nozzle 50C is adsorbed onto the rotor end plate 13, the difference in circumferential speed between the rotor end plate 13 and the cooling medium can be reduced, so that the brake torque caused by friction of the cooling medium can be reduced, and the performance of the rotary electrical machine 1 can be improved.

### Fourth embodiment

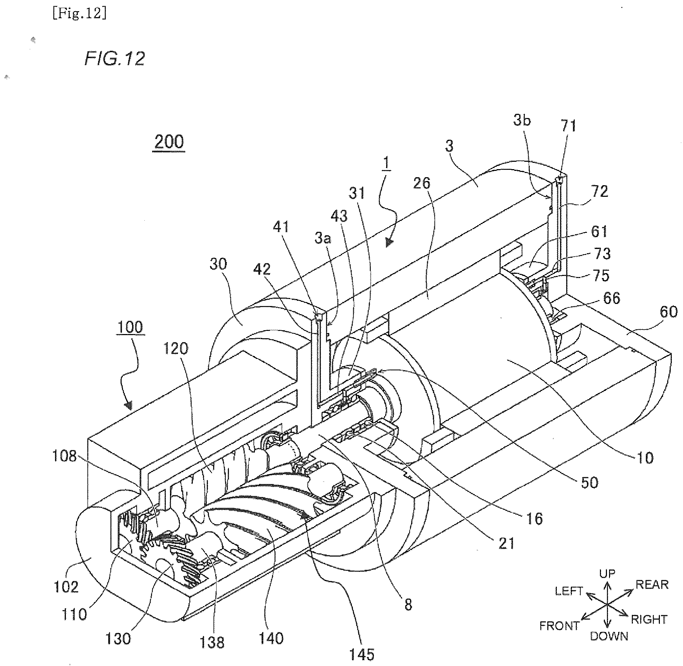

Fig. 12 is a partial cross-sectional perspective view showing the appearance of an air compressor 200 that is a fourth embodiment of the present invention. The air compressor 200 includes an air end 100 driven by the rotary electrical machine 1 described in the first embodiment. The configuration to be described below is an example of a screw air compressor; however, the rotary electrical machine 1 of the present invention can be applied to various types of air compressors. As shown in Fig. 12, the air compressor 200 includes the rotary electrical machine 1 that supplies rotational power (see Figs. 1 to 9), and the air end 100 that uses the rotational force of the rotary electrical machine 1 to produce compressed air. A male rotor 120 of the air end 100 is connected to the rotating shaft 8 of the rotary electrical machine 1 by connecting means (for example, spline, coupling, gear, or the like), and supplies the rotational power of the rotary electrical machine 1 to a first shaft 108 of the air end 100. A first bevel gear 110 is provided at the tip of the first shaft 108, and the bevel gear 110 meshes with an adjacent second bevel gear 130, thereby rotating the second bevel gear 130 at the same speed in an opposite direction to the first bevel gear 110. Since the second bevel gear 130 is provided at the tip of a second shaft 138, as the second bevel gear 130 rotates, a female rotor 140 fixed to the second shaft 138 rotates at the same speed in the opposite direction to the male rotor 120 fixed to the first shaft 108.

Air is suctioned in through a suction port (not visible in the figure) of the male rotor 120, and as the male rotor 120 and the female rotor 140 rotate, the meshing of the teeth of the rotors disengage, and air is fully suctioned into tooth spaces. Furthermore, when the male rotor 120 and the female rotor 140 rotate and the air is blocked by the wall of a casing 102, the suction is completed. The air trapped between the tooth spaces and the casing is compressed by the meshing of the rotors 120 and 140. As the rotors 120 and 140 rotate, the air is further compressed between tooth spaces 145 and the casing 102 and reaches a discharge port (not visible in the figure) while moving in the axial direction, and the pressure of the air reaches a predetermined pressure. The compressed air is discharged from the discharge port on a discharge side formed in the casing 102.

As described above, according to the present embodiment, the air compressor 200 includes the rotary electrical machine 1 according to any one of the first to third embodiments, so that the life and efficiency of the rotary electrical machine 1 are improved and the life and efficiency of the air compressor are improved.

The present invention has been described above based on the embodiments; however, the present invention is not limited to the above-described embodiments, and can be modified in various forms without departing from the concept of the present invention. In addition, the above-described embodiments are not necessarily limited to including all the configurations described. Furthermore, other configurations can be added, removed, or replaced with some of the configurations of the embodiments. For example, as long as the rotary electrical machine is any type of motor including a heat-generation element in the rotor 10, other than an interior magnet synchronous motor, the same actions and effects can be obtained.

### REFERENCE SIGNS LIST

1 Rotary electrical machine
2 Housing
3 Cylindrical portion
3a, 3b Opening portion
4, 5 Discharge port
6 O-ring
7a Inner ring retainer
7b Inner ring spacer
8 Rotating shaft
10 Rotor
11 Rotor core
12 Permanent magnet
13, 14 Rotor end plate
16 (First) bearing
17 Rolling element
18 Outer ring
19 Inner ring
21 (Second) bearing
22 Rolling element
23 Outer ring
24 Inner ring
26 Stator
27 Stator core
28 Armature winding
30 End bracket
31 Bearing accommodating portion
32 Through-hole
35 Outer ring retainer
40 Cooling medium flow passage
41 Supply port
42 Introduction flow passage
43 Axial flow passage
43a Connecting point
43b Branch point
43c Opening portion
44 First flow passage
45 Second flow passage
46, 47 Through-hole
48 Attachment hole
50, 50A to 50C Nozzle (first spray unit)
51 Large-diameter portion
52 Tapered portion
53 Small-diameter portion
53a, 53b, 53c Opening
53d Through-hole
54 Male thread
55 Outer ring spacer (second nozzle)
56 Through-hole
57a (First) spray hole
57b (Second) spray hole
58 Through-hole
60 End bracket
61 Bearing accommodating portion
65 Outer ring retainer
66 Bearing
67 Inner ring
68 Rolling element
69 Outer ring
70 Cooling medium flow passage
71 Supply port
72 Introduction flow passage
73 Axial flow passage
73a Connecting portion
73b Branch portion
73c Opening threaded portion
75 Second flow passage
76 Attachment hole
80 Nozzle
81 Large-diameter portion
82 Tapered portion
83 Small-diameter portion
83a Opening
85 Outer ring spacer (nozzle)
86 Hole
87, 88 Through-hole
90 External cooling medium circuit
91 Suction pump
92 Tank
93 Filter
94 Heat exchanger
95 Pump
100 Air end
102 Casing
108 First shaft
110 First bevel gear
120 Male rotor
130 Second bevel gear
138 Second shaft
140 Female rotor
145 Tooth space
200 Air compressor
Ax Rotation axis
F1 to F8, F11 to F13 flow of cooling medium
Rs Outer radius of shaft
Rr Outer radius of rotor core
Ro Radius of target position
Sr1 Flow passage cross-sectional area of first flow passage immediately after branch
Sr2 Flow passage cross-sectional area of first spray unit
Sb1 Flow passage cross-sectional area of second flow passage immediately after branch
Sb2 Flow passage cross-sectional area of second spray unit
Wb Thickness of rotating fluid layer of bearing
Wr Thickness of rotating fluid layer of rotor

## Claims

1. A rotary electrical machine, comprising:
a rotating shaft;
a rotor including a rotor core fixed to said rotating shaft;
bearings that rotatably support said rotating shaft on one side and the other side of said rotor core; and
a stator including a stator core and an armature winding,
said rotating shaft, said rotor, said bearings, and said stator being housed in a housing,
wherein said bearings are held by said housing,
said housing is formed by a cylindrical portion and bracket portions provided on both sides of said cylindrical portion,
bearing holders for holding outer rings of said bearings are formed in said bracket portions,
in each of said bracket portions, an introduction flow passage for a cooling medium supplied from outside said housing, and an axial flow passage formed inside said bearing holder so as to be connected to said introduction flow passage and extend in an axis direction of said rotating shaft are formed, and
in said axial flow passage, a first flow passage that sprays said cooling medium in an axial direction onto an end face of said rotor, which is orthogonal to said rotating shaft, from said bearing holder, and a second flow passage that branches off midway along said axial flow passage and that sprays said cooling medium onto said bearing are formed.

2. The rotary electrical machine according to claim 1,
wherein said first flow passage is connected to a first nozzle, and a cross-sectional area of a spray opening of said first nozzle is formed to be smaller than a cross-sectional area of said first flow passage, and
said second flow passage is connected to a second nozzle, and a cross-sectional area of a spray opening of said second nozzle is formed to be smaller than a cross-sectional area of said second flow passage.

3. The rotary electrical machine according to claim 2,
wherein a plurality of the spray openings of said second nozzle are provided, and
the cross-sectional area of said second flow passage is formed to be larger than a sum of the cross-sectional areas of said plurality of spray openings of said second nozzle.

4. The rotary electrical machine according to claim 3,
wherein when viewed in a radial direction from said rotating shaft, the spray opening of said first nozzle is provided on an inner side closer to said rotating shaft than a center of a radial range occupied by an end face of said rotor core.

5. The rotary electrical machine according to claim 3,
wherein said bearing holder has a cylindrical shape,
said first nozzle is provided on an end face of said bearing holder in a longitudinal direction, and
said second nozzle is provided on an inner peripheral surface of said bearing holder.

6. The rotary electrical machine according to claim 5,
wherein the spray opening of said first nozzle is formed in any one of a circular shape, an elliptical shape, and a rectangular shape.

7. The rotary electrical machine according to claim 5,
wherein a spray direction of said cooling medium from the spray opening of said first nozzle is provided to be inclined at a predetermined angle in a rotation direction of said rotor.

8. An air compressor, comprising:
said rotary electrical machine according to any one of claims 1 to 7; and
an air end driven by said rotary electrical machine.

9. A rotary electrical machine, comprising:
a rotating shaft;
a rotor including a permanent magnet fixed to said rotating shaft;
bearings that rotatably support said rotating shaft on a front side and a rear side of said rotor; and
a stator including a stator core and an armature winding, said rotating shaft, said rotor, said bearings, and said stator being housed in a housing,
wherein said housing is formed to include a body portion having a cylindrical shape, a front end bracket that closes a front side of said body portion and that has a through-hole through which said rotating shaft penetrates, and a rear end bracket that closes a rear side of said body portion,
a front bearing holder that holds an outer ring of said front bearing and that supports a front side of said rotating shaft is formed on an inner side of said front end bracket,
a front introduction flow passage that supplies a cooling medium from an outside and a front axial flow passage connected to said front introduction flow passage and extending in an axis direction of said rotating shaft are formed in said front end bracket,
said front axial flow passage has a shape in which an opening at a tip is narrowed, so that said cooling medium is sprayed onto a front side surface of said rotor at an increased speed,
a front bearing holder that holds an outer ring of said rear bearing and that supports a rear side of said rotating shaft is formed on an inner side of said rear end bracket,
a front introduction flow passage that supplies said cooling medium from the outside and a rear axial flow passage connected to said front introduction flow passage and extending in the axis direction of said rotating shaft are formed in said rear end bracket, and
said rear axial flow passage of said rear end bracket has a shape in which an opening at a tip is narrowed, so that said cooling medium is sprayed onto a rear side surface of said rotor at an increased speed.

10. The rotary electrical machine according to claim 9,
wherein said front axial flow passage is formed to branch into a second front flow passage, which supplies said cooling medium to said bearing, in a direction intersecting said rotating shaft, and
said rear axial flow passage is formed to branch into a second rear flow passage, which supplies said cooling medium to said bearing, in a direction intersecting said rotating shaft.

11. The rotary electrical machine according to claim 10,
wherein a second front nozzle, an opening at a tip of which is narrowed, is provided at an opening portion of said second front flow passage, and
a second rear nozzle, an opening at a tip of which is narrowed, is provided at an opening portion of said second rear flow passage.

12. The rotary electrical machine according to claim 11,
wherein two bearings are provided in said front end bracket at a distance in the axis direction, and the opening portion of said second front nozzle is located between said two bearings.

13. An air compressor, comprising:
said rotary electrical machine according to any one of claims 9 to 12; and
an air end driven by said rotary electrical machine.

## Amended claims

### Amended claims under Art. 19.1 PCT

1. A rotary electrical machine, comprising:
a rotating shaft;
a rotor including a rotor core fixed to said rotating shaft;
bearings that rotatably support said rotating shaft on one side and the other side of said rotor core; and
a stator including a stator core and an armature winding,
said rotating shaft, said rotor, said bearings, and said stator being housed in a housing,
wherein said bearings are held by said housing,
said housing is formed by a cylindrical portion and bracket portions provided on both sides of said cylindrical portion,
bearing holders having a cylindrical shape that hold outer rings of said bearings are formed in said bracket portions,
in each of said bracket portions, an introduction flow passage for a cooling medium supplied from outside said housing, and an axial flow passage formed inside said bearing holder so as to be connected to said introduction flow passage and extend in an axis direction of said rotating shaft are formed, and
in said axial flow passage, a first flow passage that sprays said cooling medium in an axial direction onto an end face of said rotor, which is orthogonal to said rotating shaft, from said bearing holder, and a second flow passage that branches off midway along said axial flow passage in a direction toward said rotating shaft and that sprays said cooling medium onto said bearing are formed.

2. The rotary electrical machine according to claim 1,
wherein said first flow passage is connected to a first nozzle, and a cross-sectional area of a spray opening of said first nozzle is formed to be smaller than a cross-sectional area of said first flow passage, and
said second flow passage is connected to a second nozzle, and a cross-sectional area of a spray opening of said second nozzle is formed to be smaller than a cross-sectional area of said second flow passage.

3. The rotary electrical machine according to claim 2,
wherein a plurality of the spray openings of said second nozzle are provided, and
the cross-sectional area of said second flow passage is formed to be larger than a sum of the cross-sectional areas of said plurality of spray openings of said second nozzle.

4. The rotary electrical machine according to claim 3,
wherein when viewed in a radial direction from said rotating shaft, the spray opening of said first nozzle is provided on an inner side closer to said rotating shaft than a center of a radial range occupied by an end face of said rotor core.

5. The rotary electrical machine according to claim 3,
wherein said bearing holder has a cylindrical shape,
said first nozzle is provided on an end face of said bearing holder in a longitudinal direction, and
said second nozzle is provided on an inner peripheral surface of said bearing holder.

6. The rotary electrical machine according to claim 5,
wherein the spray opening of said first nozzle is formed in any one of a circular shape, an elliptical shape, and a rectangular shape.

7. The rotary electrical machine according to claim 5,
wherein a spray direction of said cooling medium from the spray opening of said first nozzle is provided to be inclined at a predetermined angle in a rotation direction of said rotor.

8. An air compressor, comprising:
said rotary electrical machine according to any one of claims 1 to 7; and
an air end driven by said rotary electrical machine.

9. A rotary electrical machine, comprising:
a rotating shaft;
a rotor including a permanent magnet fixed to said rotating shaft;
bearings that rotatably support said rotating shaft on a front side and a rear side of said rotor; and
a stator including a stator core and an armature winding, said rotating shaft, said rotor, said bearings, and said stator being housed in a housing,
wherein said housing is formed to include a body portion having a cylindrical shape, a front end bracket that closes a front side of said body portion and that has a through-hole through which said rotating shaft penetrates, and a rear end bracket that closes a rear side of said body portion,
a front bearing holder that holds an outer ring of said front bearing and that supports a front side of said rotating shaft is formed on an inner side of said front end bracket,
a front introduction flow passage that supplies a cooling medium from an outside and a front axial flow passage connected to said front introduction flow passage and extending in an axis direction of said rotating shaft are formed in said front end bracket,
said front axial flow passage has a shape in which an opening at a tip is narrowed, so that said cooling medium is sprayed onto a front side surface of said rotor at an increased speed,
a front bearing holder that holds an outer ring of said rear bearing and that supports a rear side of said rotating shaft is formed on an inner side of said rear end bracket,
a front introduction flow passage that supplies said cooling medium from the outside and a rear axial flow passage connected to said front introduction flow passage and extending in the axis direction of said rotating shaft are formed in said rear end bracket, and
said rear axial flow passage of said rear end bracket has a shape in which an opening at a tip is narrowed, so that said cooling medium is sprayed onto a rear side surface of said rotor at an increased speed.

10. The rotary electrical machine according to claim 9,
wherein said front axial flow passage is formed to branch into a second front flow passage, which supplies said cooling medium to said bearing, in a direction intersecting said rotating shaft, and
said rear axial flow passage is formed to branch into a second rear flow passage, which supplies said cooling medium to said bearing, in a direction intersecting said rotating shaft.

11. The rotary electrical machine according to claim 10,
wherein a second front nozzle, an opening at a tip of which is narrowed, is provided at an opening portion of said second front flow passage, and
a second rear nozzle, an opening at a tip of which is narrowed, is provided at an opening portion of said second rear flow passage.

12. The rotary electrical machine according to claim 11,
wherein two bearings are provided in said front end bracket at a distance in the axis direction, and the opening portion of said second front nozzle is located between said two bearings.

13. An air compressor, comprising:
said rotary electrical machine according to any one of claims 9 to 12; and
an air end driven by said rotary electrical machine.

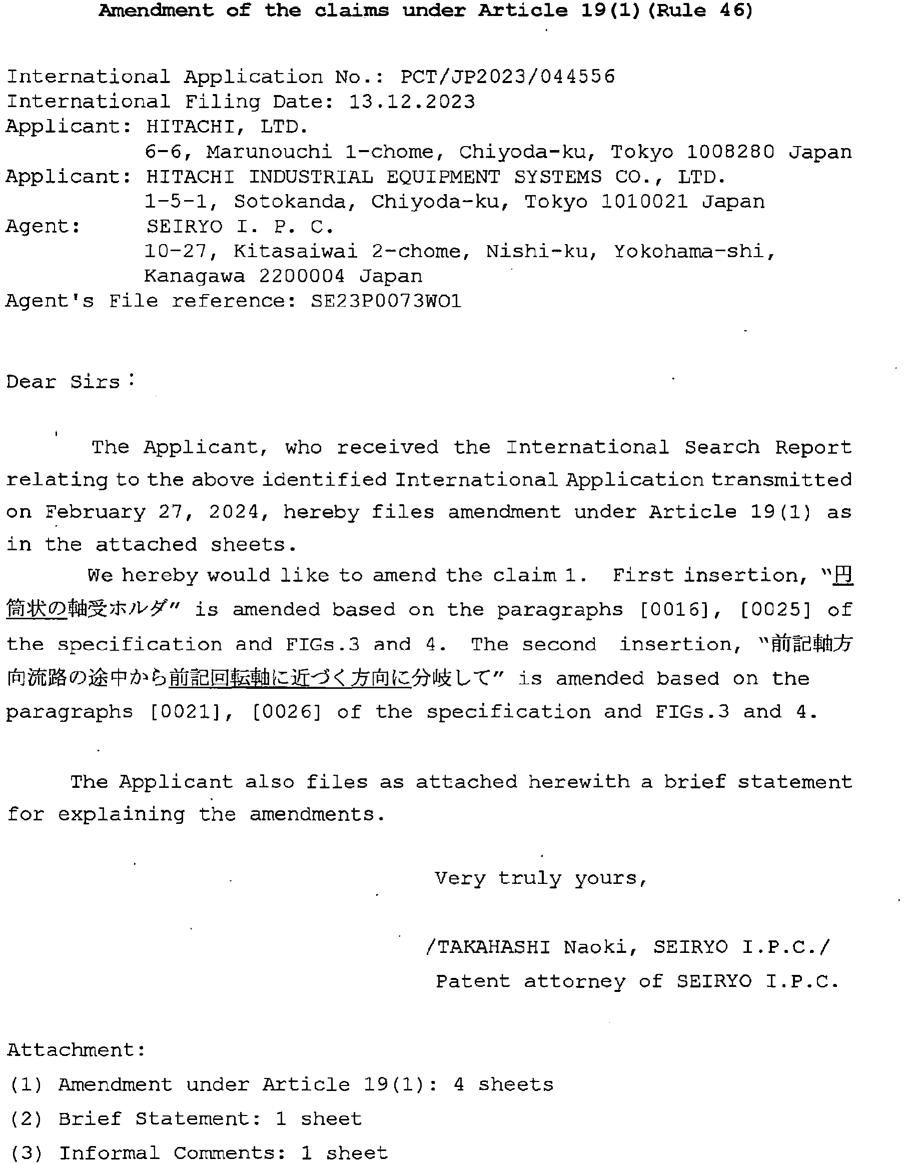

Statement under Art. 19.1 PCT
In claim 1, the phrase "bearing holders for holding outer rings of said bearings are formed in said bracket portions" has been amended to the phrase "bearing holders having a cylindrical shape that hold outer rings of said bearings are formed in said bracket portions" by adding the requirement "cylindrical". In addition, in the same claim, the phrase "a second flow passage that branches off midway along said axial flow passage and that sprays said cooling medium onto said bearing are formed" has been amended to the phrase "a second flow passage that branches off midway along said axial flow passage in a direction toward said rotating shaft and that sprays said cooling medium onto said bearing are formed" by adding said requirement "a direction toward said rotating shaft".

In claim 1, the phrase "bearing holders for holding outer rings of said bearings are formed in said bracket portions" has been amended to the phrase "bearing holders having a cylindrical shape that hold outer rings of said bearings are formed in said bracket portions" by adding the term "having a cylindrical shape". The fact that the bearing holders have a cylindrical shape is illustrated in Figs. 3 and 4, and is described in paragraphs 0016 and 0025 of the specification as being "cylindrical".

In addition, in claim 1, the phrase "a second flow passage that branches off midway along said axial flow passage and that sprays said cooling medium onto said bearing are formed" has been amended to the phrase "a second flow passage that branches off midway along said axial flow passage in a direction toward said rotating shaft and that sprays said cooling medium onto said bearing are formed" by adding "in a direction toward the rotating shaft". The fact that a second flow passage branches off midway along the axial flow passage in a direction toward the rotating shaft is shown in Figs. 3 and 4, and is described in paragraphs 0021 and 0026 of the specification.
